# EUROPEAN PATENT APPLICATION

(11) **EP 3 276 877 A1**
(43) Date of publication of application: **31.01.2018**
(21) Application number: 17183730.5
(22) Date of filing: 28.07.2017
(51) Int. Cl.: H04L 9/08, H04L 9/32, H04L 29/06

(54) **METHOD FOR THE SAFE AUTHENTICATION OF A REQUEST MADE TO A REMOTE PROVIDER AND GENERATED IN A PERSONAL DEVICE BY USING A ONE-TIME PASSWORD DEPENDING ALSO ON THE REQUEST**

(30) Priority: 28.07.2016 IT 201600079574
(71) Applicant: INFOCERT S.p.A., 00187 Roma (IT)
(72) Inventor: LEONI, Fabrizio, 20133 Milano (IT); CASATI, Egidio, 20149 Milano (IT)
(74) Representative: Maccagnan, Matteo

(57) **Abstract**

Method for the safe authentication of a request (R) made to a remote provider and generated in a personal device (4) used by a user; the authentication method comprises the steps of: generating, in the personal device (4), the request (R) made to the remote provider; generating, in the personal device (4), a one-time password (OTP) using at least one significant datum of the request (R); and sending the request (R) and at least part of the one-time password (OTP) from the personal device (4) to a management server (2) belonging to the remote provider, so as to authenticate the request (R).

## Description

### TECHNICAL FIELD

The present invention relates to a method for the safe authentication of a request made to a remote provider and generated in a personal device.

### PRIOR ART

More and more frequently, personal devices (mobile phones, tablet computers, laptop computers, desktop computer, smart TVs...) are used to order goods or services to a remote provider, normally involving a corresponding payment. That is, by using a personal device, a user generates a request for supply of goods or service to a remote provider; said request is automatically forwarded to a management server of the remote provider via Internet so that the remote provider, once made due inquiries and received the payment, can proceed to the delivery of the goods or service.

Since there is a payment involved (directly or indirectly), the request coming from the personal device of the user must be securely authenticated to prevent fraud by third parties who fraudulently assume the role of the user.

The simplest, but also less secure, authentication method is to provide a permanent (or static) password to the user that the user must enter when generating a request; this authentication method is theoretically very easy for the user (the complication stems from the fact that today's Internet users are forced to know an extremely high number of passwords, e.g. even dozens of passwords), but inherently unsafe as a permanent password poses the problem of its "*safe*" preservation from the side of the user (for example it can be written on a post-it attached to the computer), a permanent password is guessable (having to store many permanent passwords usually users choose very simple permanent passwords), and a permanent password is readable, during the transmission, by a third party who can enter into the communication.

A more complex and safer authentication method provides for the use of a one-time OTP or temporary password that is generated and used for a single transaction (therefore even if it is intercepted by a third party, who manages to enter into the communication, would be completely useless). On the other hand, a one-time password cannot be memorised by a user, and therefore generating a one-time password requires the user to have additional technology, i.e. a security token (also called hardware token, authentication token, cryptographic token, or simply token). In other words, the security token is a device (generally physical but could also be virtual, i.e. only implemented via software) needed to perform an authentication (typically a two-factor authentication).

A security token often appears in the form of a small, portable electronic device powered by a battery with autonomy in the order of a few years, provided with a screen and sometimes a numeric keypad. A security token is typically a generator of pseudo-random numbers at regular intervals (in the order of a few dozen seconds) according to an algorithm that, amongst the various factors, takes into account the passing of time due to an internal clock; other factors that affect the algorithm can be the security token serial number, or other numeric codes associated with the owner at the moment when the security token is delivered. The same algorithm is also implemented on an authentication server that was initially synchronized with the security token and therefore generates the same sequence of pseudo-random numbers of the security tokens at the same time, even though there is no communication between the two objects. Said random, transient number is combined with a PIN known to the user and to the authentication system to generate a one-time password that can be used to authenticate within the time interval expiration; the one-time password is then formed by a PIN (fixed) in possession of the user and a number (temporary) displayed by the security token.

The two-factor authentication is due to the fact that in order to generate the correct one-time password, it is necessary to have the specific security token that, at a given instant, generates the same pseudo-random number generated by the authentication server and, at the same time, the PIN is to be known, with which the number is to be combined. Given that the one-time password expires after a few dozen seconds, those who want to violate security must not only guess the one-time password valid for the particular instant, but must also use it before it expires; for this reason, a security token greatly enhances the security standards. In fact, if the violator needs more time to violate security, he/she must discover the generating algorithm of the pseudo-random numbers that would allow them to continually regenerate the temporary password; however, these pseudo-random number generator algorithms have a very high level of complexity in order to make the decryption difficult for even the most powerful computers in the world.

Using a security token allows to considerably increase security standards with respect to the use of a simple permanent (or static) password; however, also the use of a security token does not allow to reach very high security standards, as it is always possible for a third person to intercept the one-time password by entering into the communication between the mobile device of the user and the management server and therefore to fraudulently use the one-time password in the short period of time before its expiration (in this regard it is important to note that a pirated software is able to create a false request in a few fractions of a second once it becomes aware of the one-time password). In case of interception of the one-time password, the risk of fraud for the user and/or for the remote provider can be very high, as the same one-time password can be used to authenticate all requests to which the user is entitled under contract with the remote provider; for example, the same one-time password can authenticate a transaction with a money value of just a few cents, or a transaction with a money value of hundreds or thousands of Euros.

Patent Application WO2014108835A2 represents the state of closest art and describes a method for the safe authentication of a request made to a remote provider and generated in a personal device as set forth in the pre-characterizing part of the independent claim 1.

Patent Application EP2953291A1 and Patent Application WO2008127309A2 describe methods for data distribution and security.

### DESCRIPTION OF THE INVENTION

The object of the present invention is to provide a method for the safe authentication of a request made to a remote provider and generated in a personal device, which authentication method allows to increase the security of the transaction without complicating the process of use and in substantially transparent operation mode for the end user.

According to the present invention a method for the safe authentication for a request made to a remote provider and generated in a personal device, as claimed in the appended claims, is provided.

### BRIEF DESCRIPTION OF THE DRAWINGS

The present invention will now be described with reference to the accompanying drawings, which illustrate an example of nonlimiting embodiment thereof, wherein:
Figure 1 is a schematic view of an interaction system that allows a user to safely send a request to a remote provider; and
Figures 2-11 are as many schematic views of the interaction system of Figure 1 in subsequent authentication steps of the request sent by the user.

### PREFERRED EMBODIMENT OF THE INVENTION

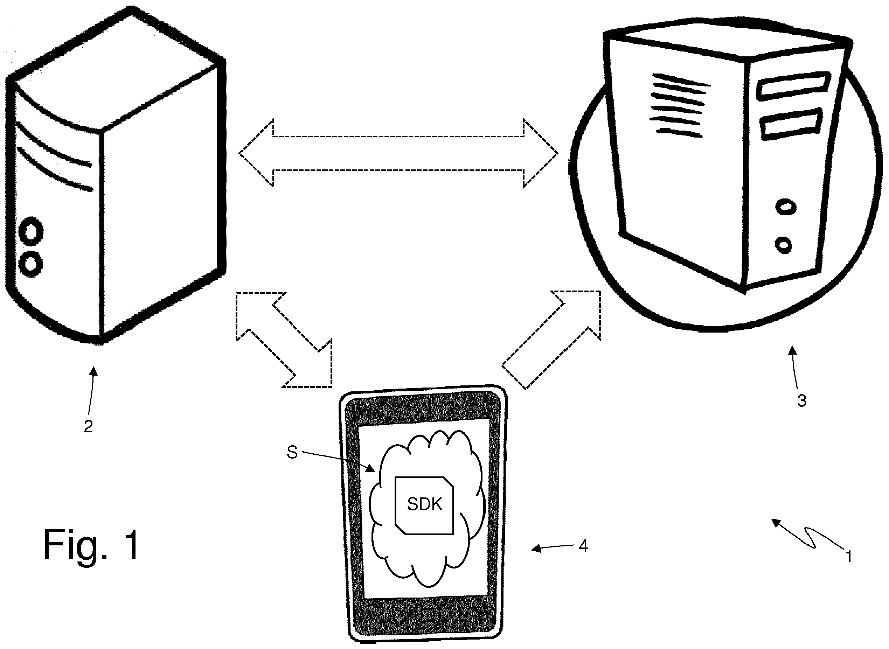

In figure 1, number 1 denotes as a whole, an interaction system that allows a user to safely send a request R made to a remote provider (a physical or virtual store, a bank, a hotel, a travel agency, a transport company ...).

The interaction system 1 comprises a management server 2 belonging to the remote provider and through which the remote provider processes the request R sent by the user. In addition, the interaction system 1 comprises an authentication server 3 which is different and separate from the management server 2 and belongs to a third party acting as a guarantor between the user and the remote provider. Finally, the interaction system 1 comprises a personal device 4 (a mobile phone, a tablet computer, a laptop computer, a desktop computer, a smart TV ...) that belongs to the user (or is in anyway available to the user) and which is used by the user to generate and send (i.e. authorize) the request R.

According to a preferred (but not binding) embodiment, the user performs a registration ("*enrolment*") in the authentication server 3 (i.e. addressed to the third party acting as a guarantor) during which provides, to the authentication server 3, both its own identification code U_{ID} (i.e. a user code U_{ID}), and an identification code FP of the personal device 4 (also known as "*Fingerprint*"); the authentication server 3 stores in its database the user code U_{ID} and the identification code FP of the corresponding personal device 4 (a preferred embodiment of the enrolment process is described in the following). It is important to point out that the enrolment process normally comprises all three actors, i.e. involves the user using his/her own 4 personal device, the authentication server 3, and also the management server 2 as a service provider; in other words, during the enrolment process, the user activates his or her own identity both in the management server 2, and in the authentication server 3. During the enrolment process, the user, among other things, chooses his/her own personal identification number PIN, which may be modified later. As described below, at this enrolment step addressed to the authentication server 3, the user may also provide authentication server 3 with a personal biometric datum that is stored in the database of the authentication server 3.

According to a preferred (but not binding) embodiment, the identification code FP of the personal device 4 comprises both an identification code of a hardware of the personal device 4 and an identification code of a software S installed in the personal device 4 (and used, for example, to generate the request R); alternatively, the identification code FP of the personal device 4 comprises only an identification code of a hardware of the personal device 4 or only an identification code of a software S installed in the personal device 4. According to a preferred embodiment, the identification code FP of the personal device 4 is stored in a safe area of the personal device 4 and
encrypted by using the authorizing PIN code selected by the user at the enrolment process.

In the personal device 4, a software S (i.e. an "App" called "*Integrating App"*) is installed, which was provided by the remote provider and was previously registered in the management server 2 so as to be able to work with the management server 2; within said software S an authentication module SDK is provided, which was provided to the remote provider by the manager of the authentication server 3 and interfaces with the rest of the software S as a "*black box"* during the authentication operations described in the following. In other words, the business management of the request R made to a remote provider is completely made by the software S without the intervention of the authentication module SDK, whereas the authentication of the request R is fully covered by the self-operating authentication module SDK (i.e. the authentication module SDK is activated by the software S from which it receives the details of the request R so as to handle the authentication of the request R without further intervention from the remaining software S).

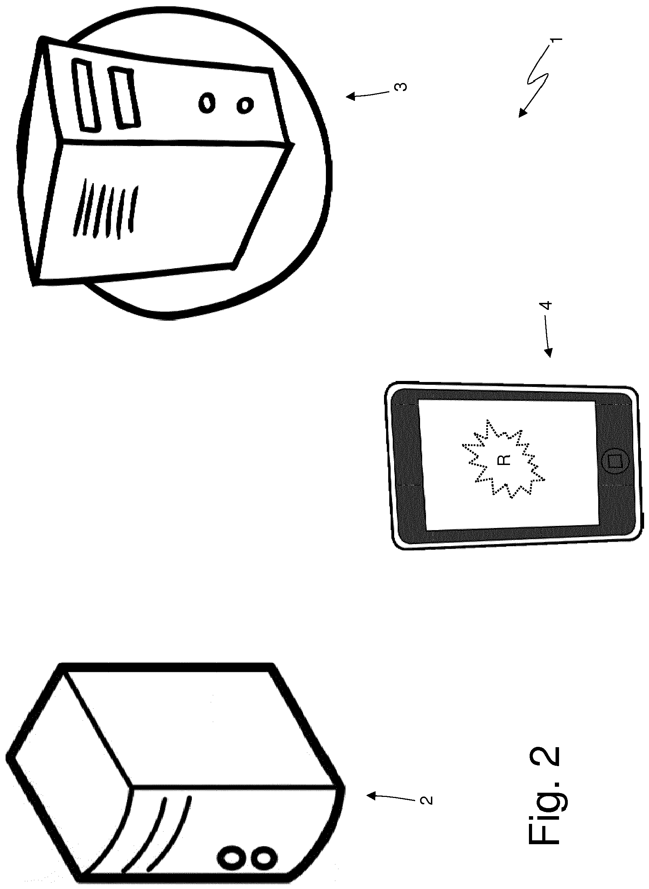

As illustrated in Figure 2, the process begins with the generation of request R for the remote provider in the personal device 4 by way of the user; generally, the user generates the request R by using the software S that was installed in the personal device 4, provided by the remote provider, and was previously logged on the management server 2 so as to be able to work with management server 2. To generate the request R, the authentication module SDK requests that the user digits his/her own authorizing PIN code that is used to decrypt relevant data that has been previously stored in a secure area of the personal device 4 and encrypted using the authorizing PIN code. By way of example, the request R may contain a purchase order for goods or service that the remote provider sends (physically or digitally) to the user after the payment of a financial consideration (for example, by charging the amount in a credit card, in a prepaid card or in a bank account of the user).

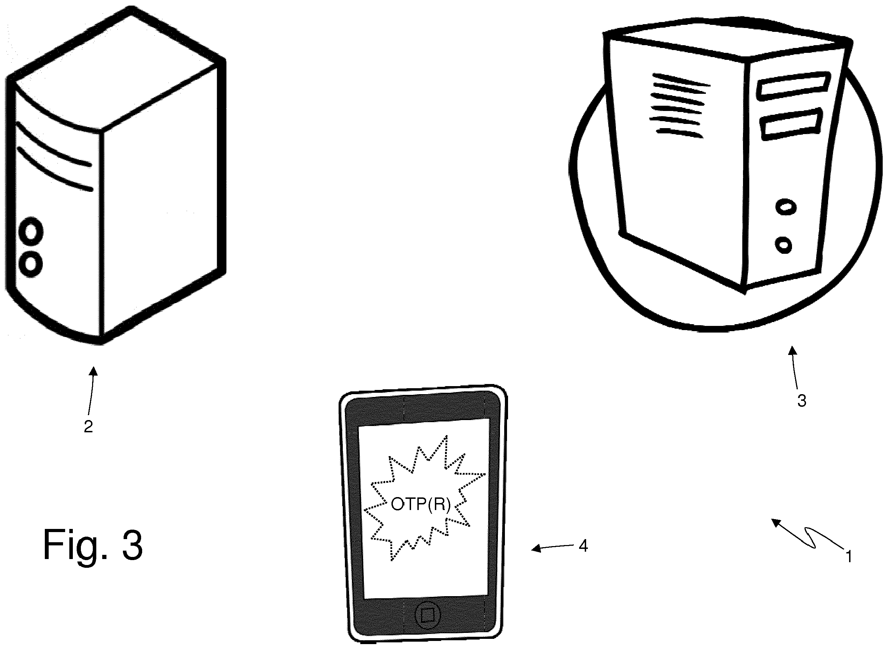

Subsequently, and as illustrated in Figure 3, the personal device 4 (through the authentication module SDK of the software S) generates a one-time password OTP (i.e. a temporary password) using a pseudo-random number generator PRNG algorithm suited to produce a sequence with, roughly, the same statistic properties of a sequence of numbers generated by a random process. Prior to being used, the pseudo-random number generator must be initialized by assigning a suitable value to at least one numeric parameter called "*seed",* and each time the same seed is used, the same sequence will always be obtained (the period of a pseudo-random number generator cannot therefore exceed the number of possible seed values); in particular, the seed of the pseudo-random number generator (or at least part of the seed as soon to be explained) is provided to the personal device 4 by the authentication server 3 during the enrolment process (as better explained in the following). According to a preferred embodiment, also the seed of the pseudo-random number generator is stored in a safe area of the personal device 4 and encrypted by using the authorizing PIN code selected by the user at the enrolment process.

According to a preferred (but not binding) embodiment, the one-time password OTP is generated by using at least one significant datum of the request R; a significant datum of the request R used in the process of generating the one-time password OTP may be the economic value of the transaction linked to the request R (i.e. how much the user has to pay to the remote provider to satisfy the request R) or an identification code (or part of it) of a goods or service that is ordered via the request R. In other words, the one-time password OTP is generated by using a pseudo-random alphanumeric code generator according to an algorithm that has, among the various factors, as input variables the time elapsed, due to an internal clock, and a significant datum of the request R. Alternatively, a significant datum of the request R may become part of the seed with which the pseudo-random number generator is initialized, which produces the one-time password OTP; in this case, the seed to which the pseudo-random number generator, generating the one-time password OTP, is initialized is partially formed (for example, the first 24 ASCII characters) by a seed provided by the authentication server 3 and in part (for example, the last 8 ASCII characters) by the economic value of the request R.

According to a preferred, but non-binding, embodiment, the authentication module SDK receives from the software S an alphanumeric description string (for example formed by a variable number of ASCII characters not exceeding 256), which describes the request R (for example said string could be a copy of the order containing the identification code of the desired goods/service and the economic value of the transaction (i.e. the agreed price) and generates a "*digest*" of the alphanumeric description string of default and constant size (for example, string of 32 ASCII characters) via a hashing algorithm (as an example using the SHA256 hashing algorithm). The digest of the description string is essentially a statistic (not mathematic) impression of the description string that has a default and constant size (generally smaller than the size of the description string) regardless of the real size of the description string. It is important to note that although the description string varies slightly (for example, of only one character over 256), there are many more significant variations on the corresponding digest due to the action of the hashing algorithm. Thus, the description string of the request R contains inside all the significant data of the request R, and consequently the digest of the description string is a direct emanation of the significant data of the request R generated directly by the description string.

Once the digest of the description string of the request R has been obtained, the authentication module SDK of the software S performs a logical operation (for example, a logical operation XOR but other logical operations may be used) between the seed of the pseudo-random number generator and the digest of the description string so as to obtain a modified seed incorporating internally both the seed provided by the authentication server 3 and the digest of the description string. At this point, the authentication module SDK of the software S initializes the pseudo-random number generator that produces the one-time password OTP by using the modified seed and the time information. Preferably (but not necessarily), both the digest of the description string of the request R and the seed have the same size (32 ASCII characters, i.e. 32 bytes, in the example above) so as to simplify the logical operation between the seed of the pseudo-random number generator and the digest of the description string.

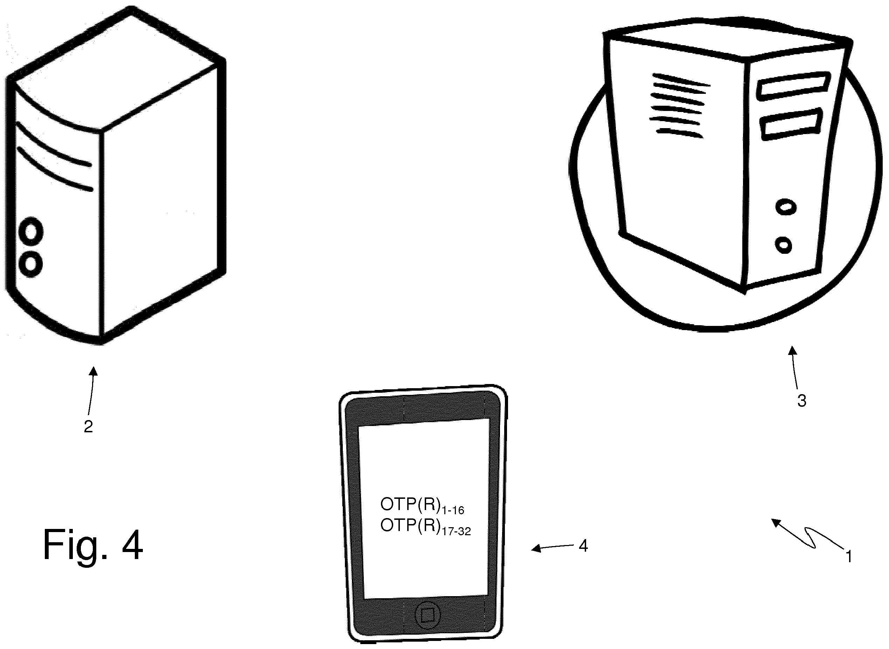

The logical operation XOR (also called "*EXCLUSIVE-OR",* "*EX-OR"* or "*MOD-2-SUM*") mentioned above is the so-called symmetric difference and returns 1 if and only if the number of operands equal to 1 is odd (i.e. if the two operands are different), while it returns 0 in all other cases (i.e., if the two operands are equal). At this point and as illustrated in Figure 4, the personal device 4 (via the authentication module SDK of the software S) subdivides the one-time password OTP in a first part OTP₁₋₁₆ and in a second part OTP₁₇₋₃₂ complementary to each other; in essence, the personal device 4 divides the one-time password OTP into two halves (OTP₁₋₁₆ and OTP₁₇₋₃₂). By way of example, the one-time password OTP may consist of a 32-byte alphanumeric sequence (each of which consists of 8 bits and can therefore assume 256 different values ranging between 0 and 255) : the first part OTP₁₋₁₆ is formed by the first sixteen bytes of the one-time password OTP and the second part OTP₁₇₋₃₂ is formed by the last sixteen bytes of the one-time password OTP.

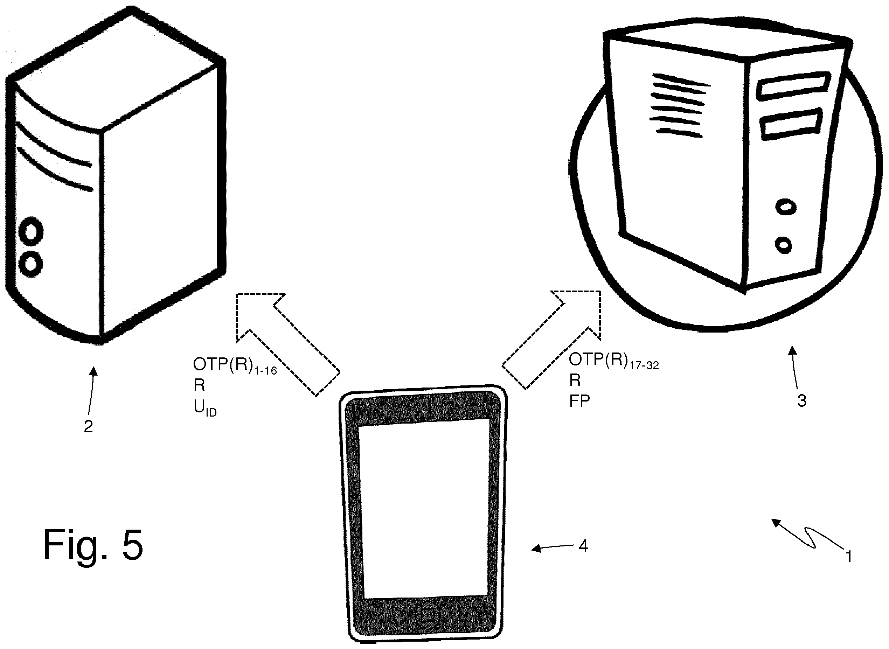

At this point and as illustrated in Figure 5, the personal device 4 (through the authentication module SDK of the software S) sends via Internet (and using a secure or encrypted communication protocol) the request R, the first part OTP₁₋₁₆ of the one-time password OTP (but not the second part OTP₁₇₋₃₂) and the user identification code U_{ID} of the management server 2 belonging to the remote provider to authenticate the request R (and therefore issuing the request R). At the same time, the personal device 4 (through the authentication module SDK of the software S) sends via Internet (and using a secure communication protocol i.e. encrypted) the request R, the second part OTP₁₇₋₃₂ of the one-time password OTP (but not the first part OTP₁₋₁₆) and the identification code FP of the personal device 4 to the authentication server 3 belonging to the third party that acts as a guarantor between the user and the remote provider.

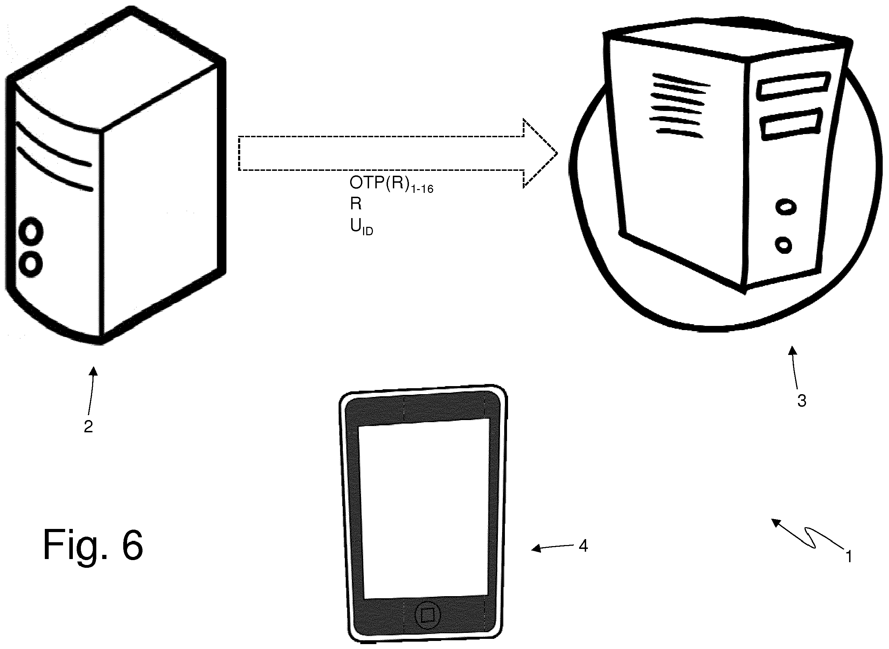

At this point and as illustrated in Figure 6, the management server 2 sends to the authentication server 3 the request R, the first part OTP₁₋₁₆ of the one-time password OTP, and the user identification code U_{ID} just received from the personal device 4.

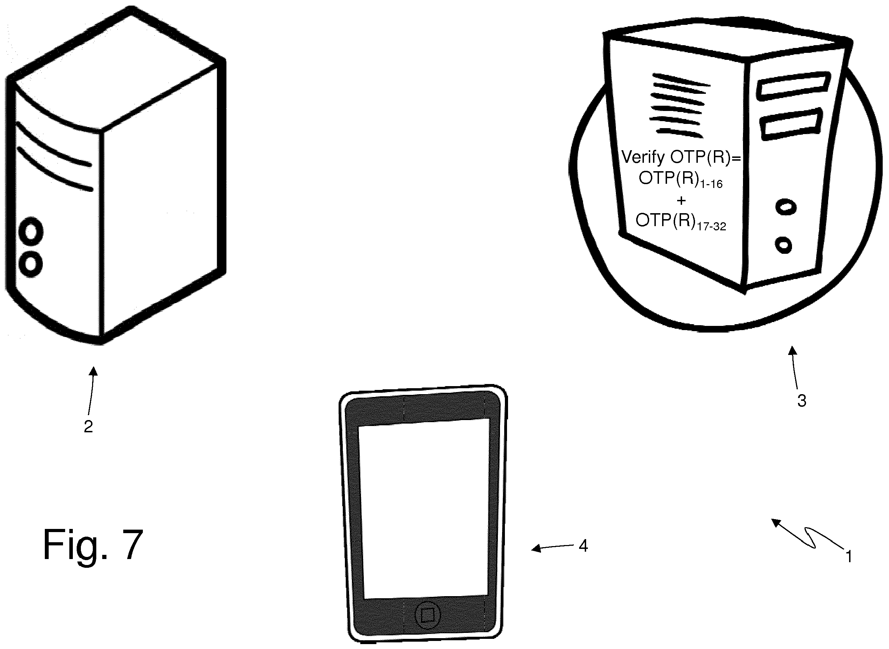

At this point and as illustrated in Figure 7, the authentication server 3 recomposes the one-time password OTP by combining the first part OTP₁₋₁₆ of the one-time password OTP received from the management server 2 with the second part OTP₁₇₋₃₂ of
the one-time password OTP received from the personal device 4. Once the one-time password OTP is recomposed (partly directly and partly indirectly) by the personal device 4, the authentication server 3 checks the correctness of the one-time password OTP. To check the correctness of the one-time password OTP received (partly directly and partly indirectly) from the personal device 4, the authentication server 3 generates a further control one-time password OTP with the same mode as it was generated (or rather as it should be generated) for the one-time password OTP in the personal device 4, and therefore the authentication server 3 checks whether the one-time password OTP received (partly directly and partly indirectly) from the personal device 4 corresponds (typically but not necessarily identical) to the control one-time password OTP generated within the authentication server 3.

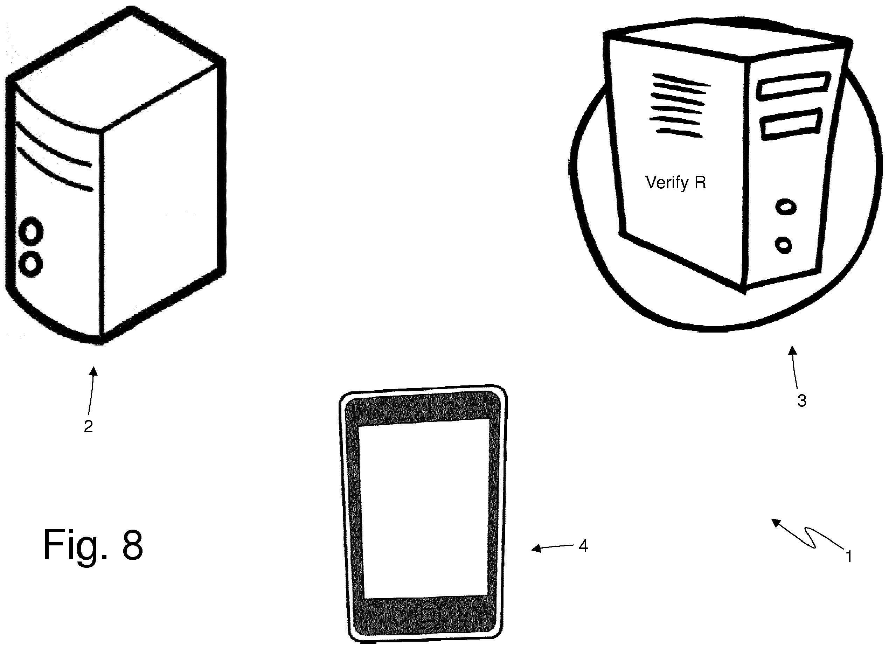

According to a preferred (but not limiting) embodiment illustrated in Figure 8, the authentication server 3 also checks that the request R received from the personal device 4 is identical to the request R received from the management server 2. The authentication server 3 always considers the check on the one-time password OTP as negative (that is, failed) if the request R received from the personal device 4 does not correspond to the request R received from the management server 2.

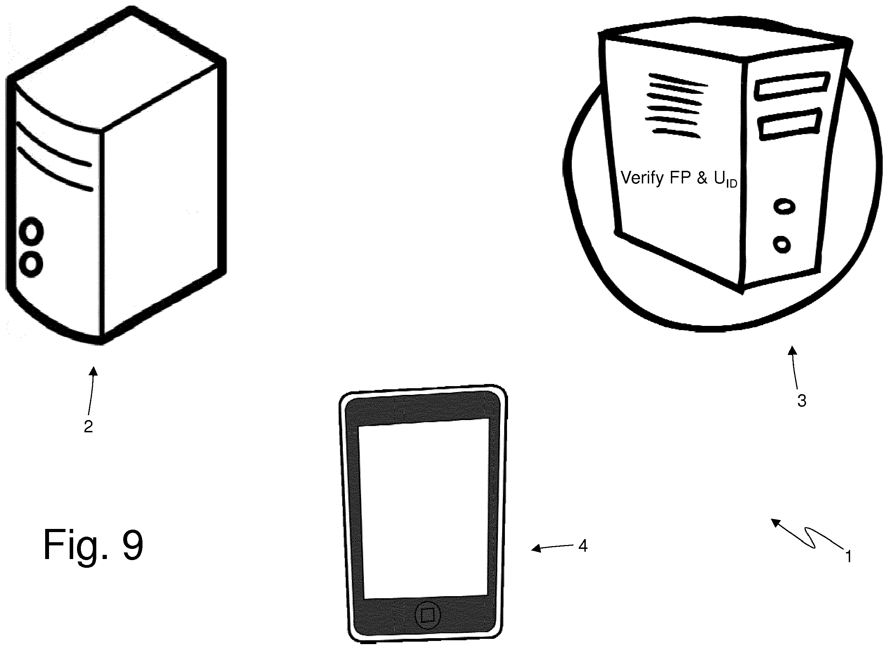

According to a preferred (but not limiting) embodiment illustrated in Figure 9, the authentication server 3 checks that the user identification code U_{ID} received from the management server 2 corresponds to the identification code FP of the personal device 4 received from the personal device 4; said check is performed using the pre-enrolment that the user has performed on the management server 2 and during which the user has provide its user identification code U_{ID} and the identification code FP of the personal device 4 to the management server 2. The authentication server 3 always considers the check on the one-time password OTP as negative (that is, failed) if the user identification code U_{ID} received from the management server 2 does not correspond to the identification code FP of the personal device 4 received from the personal device 4.

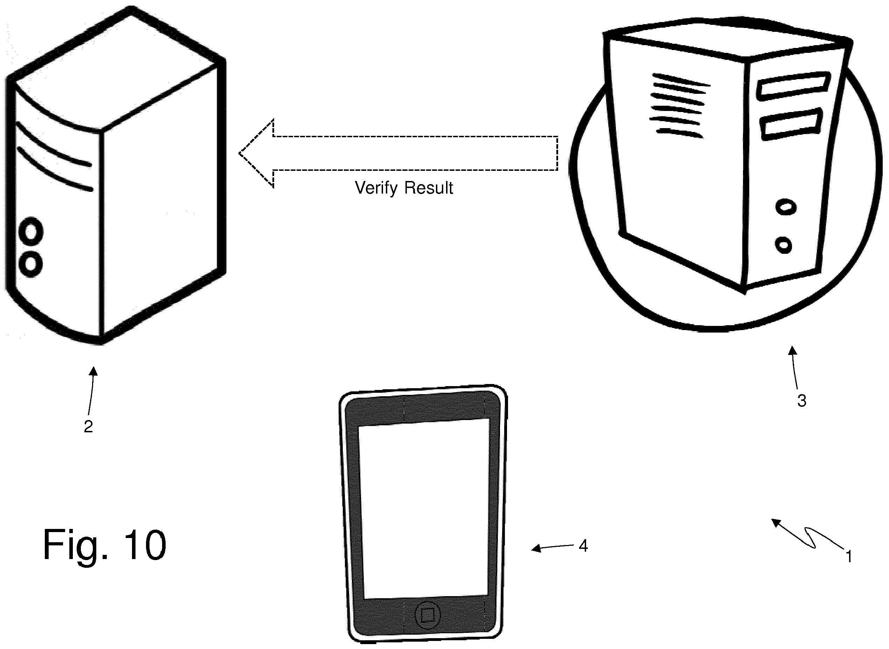

At this point and as illustrated in Figure 10, the authentication server 3 sends the management server 2 the result of the check on the one-time password OTP: this result can be positive (i.e. the request R is authentic and can be processed) or negative (i.e. the request R is not authentic and therefore must not be processed).

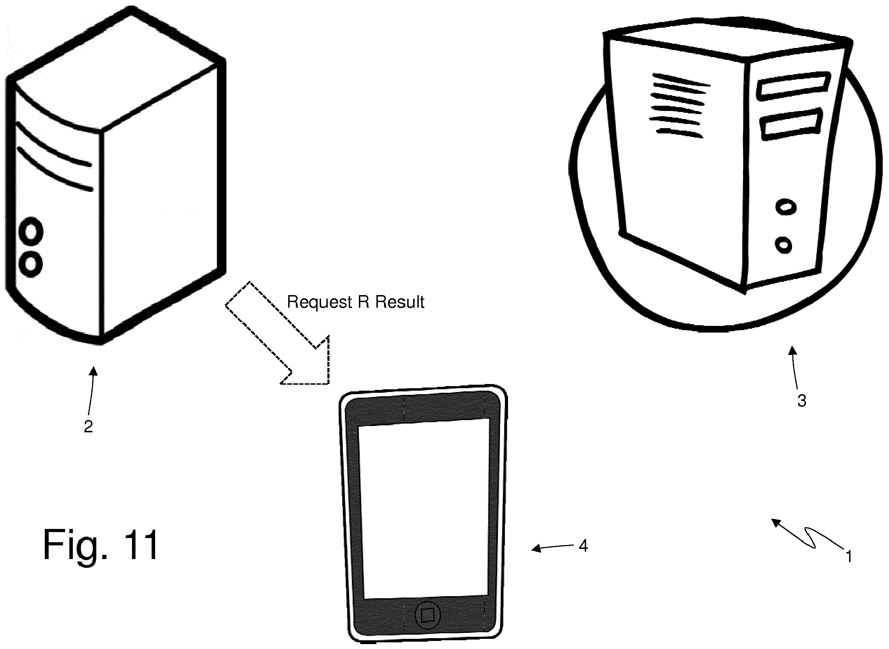

Finally, and as illustrated in Figure 11, the management server 2 sends the result of the request R (direct result of the check on the one-time password OTP received from the authentication server 3) to the personal device 4. Obviously, in order to regularly carry out the request R, the management server 2 needs a preliminary authentication of the request R (i.e. a positive check on the one-time password OTP received from the authentication server 3) and then checks that there are no other impedimental conditions (e.g. lack of availability of the required goods or service or the insufficiency of funds in the payment system chosen by the user).

According to the foregoing, as an authentication means of the request R, a one-time password OTP is used that is generated within the personal device 4 and is fractionally sent to the authentication server 3. To generate the one-time password OTP, as mentioned above, the user is required to type his/her authorizing PIN code that is used by the authentication module SDK of the software S installed in the personal device 4 to decrypt relevant data (e.g. the identification code FP of the personal device 4) that have been previously stored in a safe area of the personal device 4 and encrypted by using the authorizing PIN.

A preferred embodiment of the enrolment process of the first personal device 4 of the user (i.e. the first enrolment performed by the user via his own personal device 4) at the authentication server 3 is described below. The user must accredit at the authentication server 3 in advance to receive, from the authentication server 3, a user identification code (commonly referred to as "*UserID*") and an activation code that will be used later. Once the accredit process is completed at authentication server 3, the user must install the software S (i.e. the *"Integrating App"* containing the authentication module SDK) necessary to interact with the authentication server 3 in his/her personal device 4. Then, through the software S (*"Integrating App"* containing the authentication module SDK) installed in the personal device 4, the user must choose an authorizing PIN and enter his/her user identification code (*"UserID*") and his/her own activation code (previously provided by the authentication server 3 at the accredit time at the authentication server 3).

At this point, the software S (*"Integrating App"* containing the authentication module SDK") installed in the personal device 4 calculates a pair of keys associated with the user: a first key named PUKey and a second key named PRKey; in addition, the software S (*"Integrating App"* containing the authentication module SDK) installed in the personal device 4 performs an encryption (preferably via a SHA-2 algorithm, i.e. *"Secure Hash Algorithm 2"*) of the user identification code ("*UserID*") and of the activation code and sends the PUKey and the activation code encrypted together to the authentication server 3. At this point, the authentication server 3 decrypts the user identification code (*"UserID"*) and the activation code received from the personal device 4 and checks that correspond exactly to what has been communicated to the user upon accreditation of the user; in case of positive check, the authentication server 3 encrypts, by using the PUkey, the seed that will be used by the personal device 4 to initialize the pseudo-random number generator that produces the one-time password OTP and sends the encrypted seed to the personal device 4.

The personal device 4 receives the encrypted seed from the authentication server 3, decrypts the seed of the pseudo-random number generator using the PUkey, and then stores the seed of the pseudo-random number generator in a safe area: preferably, the seed is encrypted by using the authorizing PIN code chosen by the user at the time of the enrolment process so that it is accessible (i.e. usable) only by first entering the authorizing PIN.

At this point, the personal device 4 generates a one-time password OTP (i.e. a temporary password) using the pseudo-random number generator algorithm and the seed just received from the authentication server 3; therefore, the personal device 4 encrypts the one-time password OTP using the PUkey and sends the encrypted one-time password OTP to the authentication server 3. Finally, the authentication server 3 decrypts the encrypted one-time password OTP using the PUkey and checks that the one-time password OTP is correct (i.e. corresponds to a control one-time password OTP generated within the authentication server 3 via its own pseudo-random number generator algorithm); if the unusable one-time password OTP received from authentication server 3 is correct, the enrolment process is positively completed.

According to an alternative, and perfectly equivalent embodiment, the authorizing PIN code can be replaced by a biometric datum (a fingerprint, an iris image, a face photo ...) of the user that is detected by the personal device 4 at the time of the enrolment process and is subsequently detected by the personal device 4 when the request R is generated by using the *"Integrating App*"; in particular, the biometric datum of the user or a piece of information obtained from the biometric datum of the user are used to encrypt/decrypt (encrypt at the enrolment step, decrypt at the time of generating the request R) the relevant data (e.g. the identification code FP of the device 4) stored in a safe area of the personal device 4.

According to a possible embodiment, the biometric datum of the user or a piece of information obtained from the biometric datum of the user may be used in the generation process of the one-time password OTP, for example, the one-time password OTP is also a function of the biometric datum of the user or of an information obtained from the biometric datum of the user.

According to an alternative and perfectly equivalent embodiment, a biometric datum (a fingerprint, an image of the iris, a face photo ...) of the user or a piece of information obtained from the biometric datum of the user is used as authorisation means of the request R, which is generated within the personal device 4 is sent fractionally to the authentication server 3 according to the same identical manner as described above with respect to the one-time password OTP; in other words, the biometric datum of the user or a piece of information obtained from the biometric datum of the user substitute the one-time password OTP. It is also possible to use at the same time, as authentication means of the request R, both a one-time password OTP as well as a biometric datum of the user or a piece of information obtained from the biometric datum of the user.

In order to manage the biometric datum of the user or of the piece of information obtained from the biometric datum of the user, during the user enrolment process in the authentication server 3, the authentication server 3 stores the biometric datum of the user or the information obtained from the biometric datum of the user. When the request R is generated in the personal device 4, the biometric datum of the user is generated again in the personal device 4 (in this way, it is certain that the user is using the personal device 4); in the personal device 4, the biometric datum or a piece of information obtained from the biometric datum of the user is subdivided into a first and a second part complementary to each other and therefore the personal device 4 sends only the first part of the biometric datum of the user or the piece of information obtained from the biometric datum of the user to the management server 2 and sends only the second part of the biometric datum of the user or the piece of information obtained from the biometric datum of the user at the authentication server 3.

Then, the management server 2 sends the first part of the biometric datum of the user or the piece of information obtained from the biometric datum of the user to the authentication server 3 that re-composes the biometric datum of the user or the piece of information obtained from the biometric datum of the user by combining the first part of the biometric datum of the user or the piece of information obtained from the biometric datum of the user received from the personal device 4 through the management server 2 with the second part of the biometric datum of the user or the piece of information obtained from the biometric datum of the user received directly from the personal device 4. Finally, the authentication server 3 checks the correctness of the biometric datum of the user or of the piece of information obtained from the biometric datum of the user received (partly directly and indirectly) from the personal device 4 by comparing the biometric datum of the user with the piece of information obtained from the biometric datum of the user stored in authentication server 3 during the enrolment step.

The authentication method described above has many advantages.

First, the authentication method described above allows to perform an extremely secure authentication of the request R of the user, as the authentication means (one-time password OTP and/or eventually biometric datum of the user) generated in the personal device 4 to authenticate the request R is sent fractionally via secure Internet connections following two different and completely independent channels. In fact, the first part of the authentication means is sent from the personal device 4 to the management server 2 (and subsequently from the management server 2 to the authentication server 3) whereas the second part of the authentication means is sent from the personal device 4 to the authentication server 3; consequently, at no moment along the same communication channel, the complete authentication means is sent. Therefore, in order to become aware of the full authentication means, a third party should be able to intercept and decode at the same time two transmissions separate and independent to each other; said multiple interception is extremely complex and difficult to achieve.

In addition, the authentication method described above has additional robustness since in addition to knowing the authentication means (one-time password OTP or biometric datum of the user) it is necessary to know both the user identification code U_{ID} and the identification code FP of the personal device 4 (both these codes are compared to each other in the authentication server 3); it is important to note that the user identification code U_{ID} and the identification code FP of the personal device 4 travel the Internet following two different and completely independent channels. In fact, the user identification code U_{ID} is sent from the personal device 4 to the management server 2 (and subsequently from the management server 2 to the authentication server 3) whereas the identification code FP of the personal device 4 is sent from the personal device 4 to authentication server 3; consequently, at no time along the same communication channel the user identification code U_{ID} and the identification code FP of the personal device 4 are sent together. Therefore, in order to become aware of both U_{ID} and FP identification code, a third subject should be able to intercept and decode at the same time two secure transmissions, separate and independent to each other; as stated above, said multiple interception is extremely complex and very difficult to achieve.

Finally, the authentication method described above provides a high level of security for the user as the one-time password OTP is linked to the request R, i.e. the one-time password OTP is usable to identify just and only the request R used at the generation step of the one-time password OTP, as the one-time password OTP is generated using at least one significant datum of the request R (therefore by changing the request R inevitably also the one-time password OTP changes).

## Claims

1. A method for the safe authentication of a request (R) made to a remote provider and generated in a personal device (4) used by a user; the authentication method comprises the steps of:
generating, in the personal device (4), the request (R) made to the remote provider;
generating, in the personal device (4), a one-time password (OTP); and
sending the request (R) and at least part of the one-time password (OTP) from the personal device (4) to a management server (2) belonging to the remote provider, so as to authenticate the request (R);
the authentication method is **characterized in that** the one-time password (OTP) is generated using at least one significant datum of the request (R).

2. An authentication method according to claim 1, wherein the significant datum of the request (R) used to generate the one-time password (OTP) comprises a money value of the transaction connected to the request (R).

3. An authentication method according to claim 1 or 2, wherein the one-time password (OTP) is generated using an algorithm for the generation of pseudo-random alphanumeric codes, which uses a seed.

4. An authentication method according to claim 3, wherein the significant datum of the request (R) becomes part of the seed with which the algorithm for the generation of pseudo-random alphanumeric codes is initialized.

5. An authentication method according to claim 4 and comprising the further steps of:
obtaining and previously storing a predetermined, constant seed.
obtaining an alphanumeric description string of the request (R) ;
combining the alphanumeric description string of the request (R) with the predetermined, constant seed, so as to obtain the seed with which the algorithm for the generation of pseudo-random alphanumeric codes is initialized.

6. An authentication method according to claim 4 and comprising the further steps of:
obtaining and previously storing a predetermined, constant seed.
obtaining an alphanumeric description string of the request (R) ;
determining a digest of the alphanumeric description string of the request (R);
combining the digest of the alphanumeric description string of the request (R) with the predetermined, constant seed, so as to obtain the seed with which the algorithm for the generation of pseudo-random alphanumeric codes is initialized.

7. An authentication method according to claim 6, wherein the digest of the alphanumeric description string of the request (R) is determined using a hashing algorithm, preferably the SHA256 hashing algorithm.

8. An authentication method according to claim 6 or 7, wherein the predetermined, constant seed is combined with the digest of the alphanumeric description string of the request (R) by means of a logical operation.

9. An authentication method according to claim 8, wherein the predetermined, constant seed is combined with the digest of the alphanumeric description string of the request (R) by means of the logical operation XOR.

10. An authentication method according to any of the claims from 6 to 9, wherein the predetermined, constant seed has the same size as the digest of the alphanumeric description string of the request (R).

11. An authentication method according to any of the claims from 6 to 10, wherein the digest of the alphanumeric description string of the request (R) always has the same predetermined size regardless of the size of the alphanumeric description string of the request (R).
